# EUROPEAN PATENT APPLICATION

(11) **EP 3 650 997 A1**
(43) Date of publication of application: **13.05.2020**
(21) Application number: 18753312.0
(22) Date of filing: 11.01.2018
(51) Int. Cl.: G06F 3/041

(54) **TOUCH CONTROL DISPLAY DEVICE AND MANUFACTURING METHOD THEREFOR**

(30) Priority: 03.07.2017 CN 201710534396
(71) Applicant: BOE Technology Group Co., Ltd., Beijing 100015 (CN); Beijing BOE Display Technology Co., Ltd., Beijing 100176 (CN)
(72) Inventor: ZHANG, Wei, Beijing 100176 (CN); SHAO, Xibin, Beijing 100176 (CN); LIANG, Kui, Beijing 100176 (CN); LIAO, Yanping, Beijing 100176 (CN)
(74) Representative: Lavoix
(86) International application number: PCT/CN2018/072252
(87) International publication number: WO 2019/007021

(57) **Abstract**

The present disclosure provides a touch display device and a manufacturing method thereof. The touch display device includes a touch panel and a display panel. The display panel is arranged opposite to the touch panel and the display panel is adhered to the touch panel, and a plurality of supports is arranged between the display panel and the touch panel.

## Description

### CROSS-REFERENCE TO RELATED APPLICATION

The present application claims a priority of the Chinese patent application No.201710534396.1 filed on July 3, 2017, which is incorporated herein by reference in its entirety.

### TECHNICAL FIELD

The present disclosure relates to the field of touch display technology, in particular to a touch display device and a manufacturing method thereof.

### BACKGROUND

Usually, for a market-available on-cell touch display product, a touch panel and a display panel are attached onto each other in a full-lamination mode where an optically clear resin (OCR) or optically clear adhesive (OCA) is applied onto an entire surface of the touch panel or the display panel, or in a frame-lamination mode where an adhesive is applied onto a periphery of the touch panel or the display panel.

For the frame-lamination mode, the touch panel is adhered onto the display panel through an adhesive. The adhesive has a certain thickness (usually 0.2mm to 1mm), so there is an air gap between the touch panel and the display panel. When an external force is applied onto the touch panel, e.g., when the touch panel is touched by a person, the air gap is deformed, and a distance between the touch panel and the display panel is usually zero (0). At this time, colored stripes may occur for an image displayed by the touch display device, and thereby a display effect may be adversely affected. Especially for a large-size touch display device, the air gap may be deformed more easily. In order to reduce the deformation of the air gap, it is necessary to increase a thickness of the touch panel. However, on one hand, a thickness of the touch display device increases as well. And on the other hand, the display effect of the touch display device is adversely affected.

For the full-lamination mode where the OCR or OCA is applied to the entire surface, the manufacture cost of the touch display device is very high due to the applied OCR or OCA, especially for the large-size touch display device.

### SUMMARY

An object of the present disclosure is to provide a touch display device, and a method for manufacturing the touch display device.

In one aspect, the present disclosure provides in some embodiments a touch display device, including a touch panel, a display panel arranged opposite to the touch panel, and the display panel is adhered to the touch panel, and a plurality of supports arranged between the display panel and the touch panel.

In a possible embodiment of the present disclosure, an orthogonal projection of each support onto the display panel falls within a corresponding black matrix pattern of the display panel.

In a possible embodiment of the present disclosure, the display panel includes first black matrix patterns and second black matrix patterns arranged in a staggered manner, each first black matrix pattern has a width greater than the second black matrix pattern, and the orthogonal projection of each support onto the display panel falls within the corresponding first black matrix pattern.

In a possible embodiment of the present disclosure, the display panel includes an array substrate and a color filter substrate arranged opposite to each other to form a cell, and the first black matrix patterns and the second black matrix patterns arranged in a staggered manner are arranged at a side of the color filter substrate adjacent to the array substrate.

In a possible embodiment of the present disclosure, the display panel includes gate lines and data lines crossing the gate lines, and the orthogonal projection of each support onto the display panel falls within the corresponding first black matrix pattern parallel to the gate line.

In a possible embodiment of the present disclosure, each first black matrix pattern has a width of 80 to 100µm.

In a possible embodiment of the present disclosure, the plurality of supports has a same height.

In a possible embodiment of the present disclosure, each of the plurality of supports is of an inverted trapezoidal shape.

In a possible embodiment of the present disclosure, the plurality of supports is arranged at a surface of the display panel facing a display side or at a surface of the touch panel away from a touch side.

In a possible embodiment of the present disclosure, the display panel includes an array substrate and a color filter substrate arranged opposite to each other to form a cell, and the plurality of supports is arranged at a side of the color filter substrate away from the array substrate.

In a possible embodiment of the present disclosure, the display panel is adhered to the touch panel through an adhesive, and the height of each support is equal to a thickness of the adhesive.

In another aspect, the present disclosure provides in some embodiments a method for manufacturing a touch display device, including forming a plurality of supports between a touch panel and a display panel to be arranged opposite to each other to form a cell, arranging the touch panel opposite to the display panel, and adhering the touch panel to the display panel.

In a possible embodiment of the present disclosure, the forming the plurality of supports between the touch panel and the display panel to be arranged opposite to each other to form a cell includes forming the plurality of supports at a surface of the display panel facing a display side, or at a surface of the touch panel away from a touch side.

In a possible embodiment of the present disclosure, the arranging the touch panel opposite to the display panel and adhering the touch panel to the display panel includes applying an adhesive at an edge of the display panel or the touch panel, aligning the display panel with the touch panel, adhering the display panel to the touch panel through the adhesive, and curing the adhesive.

In a possible embodiment of the present disclosure, the arranging the touch panel opposite to the display panel and adhering the touch panel to the display panel includes applying an adhesive at an edge of the display panel or the touch panel, aligning the display panel with the touch panel through an alignment mark on the display panel and an alignment mark on the touch panel, adhering the display panel to the touch panel through the adhesive, and curing the adhesive.

In a possible embodiment of the present disclosure, an orthogonal projection of each support onto the display panel falls within a corresponding black matrix pattern of the display panel.

In a possible embodiment of the present disclosure, the display panel includes first black matrix patterns and second black matrix patterns arranged in a staggered manner, each first black matrix pattern has a width greater than the second black matrix pattern, and the orthogonal projection of each support onto the display panel falls within the corresponding first black matrix pattern.

In a possible embodiment of the present disclosure, the display panel includes gate lines and data lines crossing the gate lines, and each first black matrix pattern is arranged parallel to the gate lines.

In a possible embodiment of the present disclosure, the display panel includes an array substrate and a color filter substrate arranged opposite to each other to form a cell, and the first black matrix patterns and the second black matrix patterns arranged in a staggered manner are arranged at a side of the color filter substrate adjacent to the array substrate.

In a possible embodiment of the present disclosure, each first black matrix pattern has a width of 80 to 100µm.

In a possible embodiment of the present disclosure, the display panel includes an array substrate and a color filter substrate arranged opposite to each other to form a cell, and the forming the plurality of supports at the surface of the display panel facing the display side includes forming the plurality of supports at a side of the color filter substrate away from the array substrate.

In a possible embodiment of the present disclosure, the height of each support is equal to a thickness of the adhesive.

### BRIEF DESCRIPTION OF THE DRAWINGS

FIG. 1 is a planar view of a display panel according to one embodiment of the present disclosure;
FIG. 2 is a schematic view showing the display panel according to one embodiment of the present disclosure;
FIG. 3 is a schematic view showing a touch panel according to one embodiment of the present disclosure;
FIG. 4 is a schematic view showing a touch display device according to one embodiment of the present disclosure; and
FIG. 5 is a planar view of an array substrate of the display panel according to one embodiment of the present disclosure.

### DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments.

In the related art, when a frame-lamination mode is adopted for an on-cell touch display product, an air gap may easily be deformed, so a display effect of the touch display product may be adversely affected. In addition, when a full-lamination mode using an OCR or OCA is adopted, the resultant touch display product may be expensive. An object of the present disclosure is to provide a touch panel, a display panel, a touch display device and a method for manufacturing the touch display device, so as to ensure the display effect of the on-cell touch display device while reducing the manufacture cost thereof.

The present disclosure provides in some embodiments a display panel, and a plurality of supports is arranged at a surface of the display panel facing a display side. After the display panel is adhered to a corresponding touch panel, the supports are arranged between the display panel and the touch panel, so as to maintain a gap therebetween. In a possible embodiment of the present disclosure, the supports having a same height may be sandwiched between the display panel and the touch panel.

According to the embodiments of the present disclosure, the plurality of supports is arranged between the touch panel and the display panel so as to maintain the gap therebetween, thereby to prevent an air gap between the display panel and the touch panel from being deformed and ensure a display effect of a touch display device. In addition, through the supports, it is able to reduce a thickness of the touch panel of a large-size touch display device, and improve the display effect and the touch effect thereof. Further, it is unnecessary to apply an OCA or OCR to an entire surface of the display panel or the touch panel, so it is able to reduce the manufacture cost of the touch display device.

In a possible embodiment of the present disclosure, an orthogonal projection of each support onto the display panel falls within a corresponding black matrix pattern of the display panel. Hence, the display effect of the touch display device may not be adversely affected, even when the support is made of a nontransparent material.

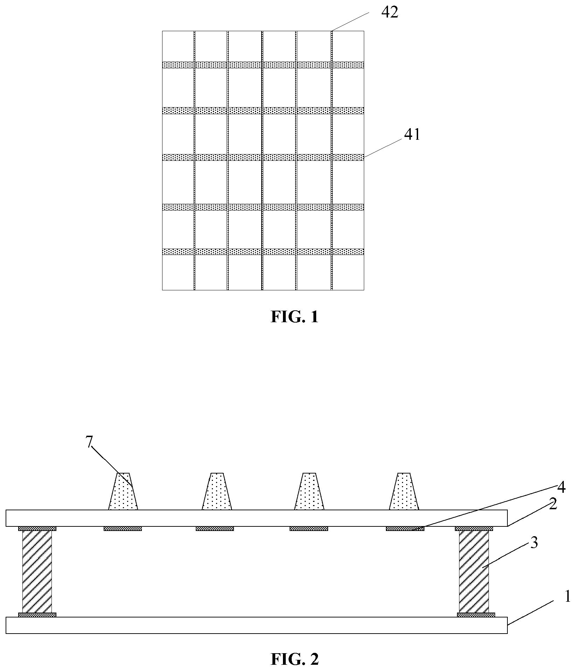

In a possible embodiment of the present disclosure, the display panel includes gate lines and data lines crossing the gate lines. Correspondingly, as shown in FIG. 1, the display panel includes first black matrix patterns 41 arranged parallel to the gate lines and second black matrix patterns 42 arranged parallel to the data lines. Usually, each first black matrix pattern 41 parallel to the gate lines has a relatively large width, e.g., about 80 to 100µm, while each second black matrix pattern 42 parallel to the data lines has a relatively small width, e.g., about 20 to 30µm. Hence, each support is arranged at a position corresponding to the first black matrix pattern 41 parallel to the gate lines. For example, the orthogonal projection of each support onto the display panel falls within the corresponding first black matrix pattern 41. In this way, it is able to provide the support with a relatively large width, thereby to maintain the gap between the display panel and the touch panel in a better manner. Here, the width of the support may refer to a width in a direction perpendicular to an extension direction of the gate line, i.e., a direction parallel to an extension direction of the data line.

In a possible embodiment of the present disclosure, as shown in FIG. 2, the display panel includes an array substrate 1 and a color filter substrate 2 arranged opposite to each other to form a cell. The array substrate 1 is adhered to the color filter substrate 2 through a sealant 3. A plurality of black matrix patterns 4 is arranged at a side of the color filter substrate 2 facing the array substrate 1, and the plurality of supports 7 is arranged at a side of the color filter substrate 2 away from the array substrate 1. An orthogonal projection of each support 7 onto the color filter substrate 2 falls within the corresponding black matrix pattern 4. In this way, the display effect of the display panel may not be adversely affected, even when the supports 7 are made of a nontransparent material.

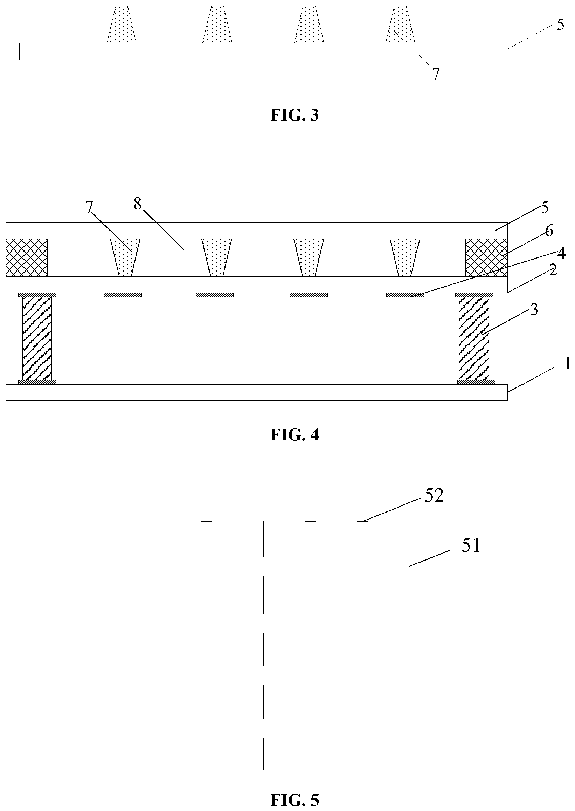

In a possible embodiment of the present disclosure, gate lines 51 and data lines 52 crossing the gate lines 51 are arranged on the array substrate 1, as shown in FIG. 5. The orthogonal projection of each support 7 onto the color filter substrate 2 falls within the corresponding black matrix pattern 4 parallel to the gate lines. Of course, the supports 7 may also be made of a transparent material. When the supports 7 are made of the transparent material, the orthogonal projection of each support 7 onto the color filter substrate 2 may, or may not, fall within the corresponding black matrix pattern 4. In a possible embodiment of the present disclosure, the orthogonal projection of each support 7 onto the color filter substrate 2 may overlap, or partially overlap, the corresponding black matrix pattern 4, i.e., a position of each support 7 is not limited by the black matrix pattern 4.

In a possible embodiment of the present disclosure, each support 7 is of an inverted trapezoidal shape.

In a possible embodiment of the present disclosure, each support 7 may be made of a same material as a spacer between the array substrate and the color filter substrate, e.g., a known Post Spacer (PS) or Ball Spacer (BS). The plurality of supports 7 is distributed evenly on the color filter substrate (or every two adjacent supports 7 are spaced apart from each other at a same interval). In this way, after the display panel is adhered to the corresponding touch panel, it is able for the supports 7 to maintain the gap therebetween in a better manner.

It should be appreciated that, sizes, positions, shapes, the number and/or a density of the supports 7 may be set in accordance with a size of the display panel as well as the practical need, and thus will not be particularly defined herein.

The present disclosure further provides in some embodiments a touch panel. As shown in FIG. 3, the plurality of supports 7 is arranged at a surface of the touch panel 5 away from a touch side. After the touch panel 5 is adhered to the corresponding display panel, the plurality of supports 7 is arranged between the touch panel 5 and the display panel, so as to maintain the gap therebetween.

According to the embodiments of the present disclosure, the plurality of supports is arranged between the touch panel and the display panel so as to maintain the gap therebetween, thereby to prevent an air gap between the display panel and the touch panel from being deformed and ensure a display effect of a touch display device. In addition, through the supports, it is able to reduce a thickness of the touch panel of a large-size touch display device, and improve the display effect and the touch effect thereof. Further, it is unnecessary to apply an OCA or OCR to an entire surface of the display panel or the touch panel, so it is able to reduce the manufacture cost of the touch display device.

In a possible embodiment of the present disclosure, an orthogonal projection of each support 7 onto the display panel falls within a corresponding black matrix pattern of the display panel. Hence, the display effect of the touch display device may not be adversely affected, even when the support is made of a nontransparent material. Of course, the supports 7 may also be made of a transparent material. When the supports 7 are made of the transparent material, the orthogonal projection of each support 7 onto the display panel may, or may not, fall within the corresponding black matrix pattern, i.e., a position of each support 7 is not limited by the black matrix pattern.

The present disclosure further provides in some embodiments a touch display device including a display panel and a touch panel arranged opposite to each other to form a cell. The display panel is adhered to the touch panel through an adhesive. In a possible embodiment of the present disclosure, the adhesive is applied at a peripheral region (or an edge) of the display panel and the touch panel. A plurality of supports is arranged between the display panel and the touch panel, and a height of each support is equal to a thickness of the adhesive.

According to the embodiments of the present disclosure, the plurality of supports is arranged between the touch panel and the display panel so as to maintain the gap therebetween, thereby to prevent an air gap between the display panel and the touch panel from being deformed and ensure a display effect of the touch display device. In addition, through the supports, it is able to reduce a thickness of the touch panel of a large-size touch display device, and improve the display effect and the touch effect thereof. Further, it is unnecessary to apply an OCA or OCR to an entire surface of the display panel or the touch panel, so it is able to reduce the manufacture cost of the touch display device.

In a possible embodiment of the present disclosure, an orthogonal projection of each support onto the display panel falls within a corresponding black matrix pattern of the display panel. Hence, the display effect of the touch display device may not be adversely affected, even when the support is made of a nontransparent material.

In a possible embodiment of the present disclosure, the display panel includes gate lines and data lines crossing the gate lines. Correspondingly, as shown in FIG. 1, the display panel includes first black matrix patterns 41 arranged parallel to the gate lines and second black matrix patterns 42 arranged parallel to the data lines. Usually, each first black matrix pattern 41 parallel to the gate lines has a relatively large width, e.g., about 80 to 100µm, while each second black matrix pattern 42 parallel to the data lines has a relatively small width, e.g., about 20 to 30µm. Hence, each support is arranged at a position corresponding to the first black matrix pattern 41 parallel to the gate lines. For example, the orthogonal projection of each support onto the display panel falls within the corresponding first black matrix pattern 41. In this way, it is able to provide the support with a relatively large width, thereby to maintain the gap between the display panel and the touch panel in a better manner.

The display touch device may be any product or member having a display function, e.g., liquid crystal television, liquid crystal display, digital photo frame, mobile phone or flat-panel computer. In addition, the touch display device may further include a flexible circuit board, a printed circuit board and a back plate.

During the implementation, as shown in FIG. 4, the touch display device includes the display panel and the touch panel 5 adhered to each other through the adhesive 6. The adhesive 6 is merely arranged at the edges of the display panel and the touch panel 5, and there is a gap 8 between the touch panel 5 and the display panel. The display panel includes an array substrate 1 and a color filter substrate 2 arranged opposite to each other to form a cell. The array substrate 1 is adhered to the color filter substrate 2 through a sealant 3. A plurality of black matrix patterns 4 is arranged at a side of the color filter substrate 2 facing the array substrate 1. A plurality of supports 7 is arranged between the display panel and the touch panel 5, and a height of each support 7 is equal to the thickness of the adhesive 6, i.e., a thickness of the gap 8.

As shown in FIG. 4, an orthogonal projection of each support 7 onto the color filter substrate 2 falls within the corresponding black matrix pattern 4. In this way, the display effect of the display panel may not be adversely affected, even when the supports 7 are made of a nontransparent material. Of course, the supports 7 may also be made of a transparent material. When the supports 7 are made of the transparent material, the orthogonal projection of each support 7 onto the color filter substrate 2 may, or may not, fall within the corresponding black matrix pattern 4, i.e., a position of each support 7 is not limited by the black matrix pattern 4.

Sizes, positions, shapes, the number and/or a density of the supports 7 may be set in accordance with a size of the display panel as well as the practical need. In a possible embodiment of the present disclosure, the supports 7 are distributed evenly between the display panel and the touch panel 5. In this way, after the display panel is adhered to the corresponding touch panel, it is able for the supports 7 to maintain the gap therebetween in a better manner. The supports 7 may be made of a same material as a spacer inside the display panel.

The scheme in the embodiments of the present disclosure may be adapted to various on-cell touch display products, e.g., a One Glass Solution (OGS) touch display product, a Glass-Glass (GG) touch display product, a Glass-Film-Film (GFF) touch display product, and a Glass-Film (GF) touch display product.

The present disclosure further provides in some embodiments a method for manufacturing a touch display device, including forming a plurality of supports on a display panel or a touch panel, and adhering the touch panel to the display panel so as to enable the supports to be arranged between them. A height of each support is equal to a thickness of the adhesive.

According to the embodiments of the present disclosure, the plurality of supports is arranged between the touch panel and the display panel so as to maintain the gap therebetween, thereby to prevent an air gap between the display panel and the touch panel from being deformed and ensure a display effect of the touch display device. In addition, through the supports, it is able to reduce a thickness of the touch panel of a large-size touch display device, and improve the display effect and the touch effect thereof. Further, it is unnecessary to apply an OCA or OCR to an entire surface of the display panel or the touch panel, so it is able to reduce the manufacture cost of the touch display device.

In a possible embodiment of the present disclosure, the method may include the following steps.

The plurality of supports may be formed at a surface of the display panel facing a display side. In a possible embodiment of the present disclosure, an orthogonal projection of each support onto the display panel falls within a corresponding black matrix pattern of the display panel. Hence, the display effect of the touch display device may not be adversely affected, even when the support is made of a nontransparent material. Of course, the supports may also be made of a transparent material. When the supports are made of the transparent material, the orthogonal projection of each support onto the display panel may, or may not, fall within the corresponding black matrix pattern, i.e., a position of each support is not limited by the black matrix pattern.

Next, the adhesive may be applied at the edge of the display panel or the touch panel, and the display panel may be aligned with the touch panel and adhered to the touch panel through the adhesive, so as to enable the supports to be arranged between the display panel and the touch panel. Then, the adhesive may be cured.

As mentioned above, the supports are formed on the display panel, so when the display panel is aligned with the touch panel, relatively low alignment accuracy is required.

In another possible embodiment of the present disclosure, the method may include forming the plurality of supports at a surface of the touch panel away from a touch side, applying an adhesive at an edge of the display panel or the touch panel, aligning the display panel with the touch panel through an alignment mark on the display panel and an alignment mark on the touch panel, adhering the display panel to the touch panel through the adhesive, and curing the adhesive so as to enable the supports to be arranged between the display panel and the touch panel and enable an orthogonal projection of each support onto the display panel to fall within the corresponding black matrix pattern of the display panel. In this way, the display effect of the display panel may not be adversely affected, even when the supports are made of a nontransparent material.

Of course, the supports may also be made of a transparent material. When the supports are made of the transparent material, the orthogonal projection of each support onto the display panel may, or may not, fall within the corresponding black matrix pattern, i.e., a position of each support is not limited by the black matrix pattern.

As mentioned above, the supports are formed on the touch panel, so it is necessary to accurately align the touch panel with the display panel through the alignment marks, so as to enable the orthogonal projection of each support onto the display panel to fall within an orthogonal projection of the corresponding black matrix pattern onto the display panel.

Unless otherwise defined, any technical or scientific term used herein shall have the common meaning understood by a person of ordinary skills. Such words as "first" and "second" used in the specification and claims are merely used to differentiate different components rather than to represent any order, number or importance. Similarly, such words as "one" or "one of' are merely used to represent the existence of at least one member, rather than to limit the number thereof. Such words as "connect" or "connected to" may include electrical connection, direct or indirect, rather than to be limited to physical or mechanical connection. Such words as "on", "under", "left" and "right" are merely used to represent relative position relationship, and when an absolute position of the object is changed, the relative position relationship will be changed too.

It should be appreciated that, in the case that such an element as layer, film, region or substrate is arranged "on" or "under" another element, it may be directly arranged "on" or "under" the other element, or an intermediate element may be arranged therebetween.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A touch display device, comprising a touch panel and a display panel, wherein the display panel is arranged opposite to the touch panel and the display panel is adhered to the touch panel, and a plurality of supports is arranged between the display panel and the touch panel.

2. The touch display device according to claim 1, wherein an orthogonal projection of each support onto the display panel falls within a corresponding black matrix pattern of the display panel.

3. The touch display device according to claim 2, wherein the display panel comprises first black matrix patterns and second black matrix patterns arranged in a staggered manner, each first black matrix pattern has a width greater than the second black matrix pattern, and the orthogonal projection of each support onto the display panel falls within the corresponding first black matrix pattern.

4. The touch display device according to claim 3, wherein the display panel comprises an array substrate and a color filter substrate arranged opposite to each other to form a cell, and the first black matrix patterns and the second black matrix patterns arranged in a staggered manner are arranged at a side of the color filter substrate adjacent to the array substrate.

5. The touch display device according to claim 3 or 4, wherein the display panel comprises gate lines and data lines crossing the gate lines, and each first black matrix pattern is arranged parallel to the gate lines.

6. The touch display device according to any one of claims 3 to 5, wherein each first black matrix pattern has a width of 80 to 100µm.

7. The touch display device according to any one of claims 1 to 6, wherein the plurality of supports has a same height.

8. The touch display device according to any one of claims 1 to 7, wherein each of the plurality of supports is of an inverted trapezoidal shape.

9. The touch display device according to any one of claims 1 to 8, wherein the plurality of supports is arranged at a surface of the display panel facing a display side or at a surface of the touch panel away from a touch side.

10. The touch display device according to claim 9, wherein the display panel comprises an array substrate and a color filter substrate arranged opposite to each other to form a cell, and the plurality of supports is arranged at a side of the color filter substrate away from the array substrate.

11. The touch display device according to any one of claims 1 to 10, wherein the display panel is adhered to the touch panel through an adhesive, and the height of each support is equal to a thickness of the adhesive.

12. A method for manufacturing a touch display device, comprising forming a plurality of supports between a touch panel and a display panel to be arranged opposite to each other to form a cell, arranging the touch panel opposite to the display panel, and adhering the touch panel to the display panel.

13. The method according to claim 12, wherein the forming the plurality of supports between the touch panel and the display panel to be arranged opposite to each other to form a cell comprises forming the plurality of supports at a surface of the display panel facing a display side, or forming the plurality of supports at a surface of the touch panel away from a touch side.

14. The method according to claim 12 or 13, wherein the arranging the touch panel opposite to the display panel and adhering the touch panel to the display panel comprises applying an adhesive at an edge of the display panel or the touch panel, aligning the display panel with the touch panel, adhering the display panel to the touch panel through the adhesive, and curing the adhesive.

15. The method according to claim 12 or 13, wherein the arranging the touch panel opposite to the display panel and adhering the touch panel to the display panel comprises applying an adhesive at an edge of the display panel or the touch panel, aligning the display panel with the touch panel through an alignment mark on the display panel and an alignment mark on the touch panel, adhering the display panel to the touch panel through the adhesive, and curing the adhesive.

16. The method according to any one of claims 12 to 15, wherein an orthogonal projection of each support onto the display panel falls within a corresponding black matrix pattern of the display panel.

17. The method according to claim 16, wherein the display panel comprises first black matrix patterns and second black matrix patterns arranged in a staggered manner, each first black matrix pattern has a width greater than the second black matrix pattern, and the orthogonal projection of each support onto the display panel falls within the corresponding first black matrix pattern.

18. The method according to claim 17, wherein the display panel comprises an array substrate and a color filter substrate arranged opposite to each other to form a cell, and the first black matrix patterns and the second black matrix patterns arranged in a staggered manner are arranged at a side of the color filter substrate adjacent to the array substrate.

19. The method according to claim 17 or 18, wherein the display panel comprises gate lines and data lines crossing the gate lines, and each first black matrix pattern is arranged parallel to the gate lines.

20. The method according to any one of claims 17 to 19, wherein each first black matrix pattern has a width of 80 to 100µm.

21. The method according to any one of claims 13 to 20, wherein the display panel comprises an array substrate and a color filter substrate arranged opposite to each other to form a cell, and the forming the plurality of supports at the surface of the display panel facing the display side comprises forming the plurality of supports at a side of the color filter substrate away from the array substrate.

22. The method according to any one of claims 12 to 21, wherein the height of each support is equal to a thickness of the adhesive.
